# EUROPEAN PATENT APPLICATION

(11) **EP 4 035 837 A1**
(43) Date of publication of application: **03.08.2022**
(21) Application number: 21153762.6
(22) Date of filing: 27.01.2021
(51) Int. Cl.: B25F 1/00, A01B 1/02

(54) **TOOL ASSEMBLY**

(71) Applicant: HUSQVARNA AB, 561 82 Huskvarna (SE)
(72) Inventor: Kohl, Peter, 89257 Illertissen (DE)
(74) Representative: Finkele, Rolf

(57) **Abstract**

A tool assembly (**100**) includes a foldable sheet (**102**). The tool assembly (**100**) includes one or more fasteners (**126**) coupled with the foldable sheet (**102**). The one or more fasteners (**126**) removably couple with one or more slots (**112**) defined on the foldable sheet (**102**). The one or more fasteners (**126**) coupled with the one or more slots (**112**) of the foldable sheet (**102**) defines the tool assembly (**100**). The tool assembly (**100**) is characterized in that the tool assembly (**100**) provides a first configuration when the one or more fasteners (**126**) couple with at least a first slot (**122**) of the one or more slots (**112**). Further, the tool assembly (**100**) provides a second configuration when the one or more fasteners (**126**) couple with at least a second slot (**124**) of the one or more slots (**112**).

## Description

### TECHNICAL FIELD

The present disclosure relates to a tool assembly.

### BACKGROUND

Generally, for cultivation of soil and gardening applications, a variety of gardening tools may be used. Typical gardening tools may include a shovel, a brush, a puller, a funnel, a scraper, a broom, and the like. These tools have different shapes and sizes for different purposes. For each gardening operation, a user may need to use separate tool. Further, during gardening operation, the tools may be scattered over the ground, and people may get injured by the scattered tools. Moreover, it is inconvenient to carry a set of such tools to the jobsite. Thus, there is a need of a tool which addresses the aforementioned issues.

An example of a stacked body of funnel sheets is provided in Korean application 20,140,068,378 (hereinafter referred to as '378 reference). The '378 reference discloses the stacked body of funnel sheets, which includes a first funnel sheet and a second funnel sheet. The first funnel sheet includes a first corner, and a second corner which is folded facing the first corner to form a cone entrance along with the first corner. The first funnel sheet also includes a third corner which is connected from the first corner to the second corner to form a cone exit. The first funnel sheet further includes a coating layer on a face, and an adhesive which is applied on at least one of first and second sides of the other face on the opposite side. The second funnel sheet has the same structure with the first funnel sheet and is arranged below the first funnel sheet. The second funnel sheet can be attached and detached by the adhesive of the first funnel sheet. However, the stacked body of funnel sheets of '378 reference seems short of providing different arrangements or configurations, which may be secured with different simple, and efficient fastening arrangements. Further, the '378 reference seems silent on the option of upgrading the stacked body of funnel sheets with different gardening tools, such as the shovel, the brush, the puller, the scraper, the broom, and the like. Such issue may inconvenience users due to the constraint of storing, carrying and maintaining different gardening tools.

### SUMMARY

In view of the above, it is an objective of the present disclosure to solve or at least reduce the drawbacks discussed above. The objective is at least partially achieved by a new design, arrangement of a tool assembly. The tool assembly includes a foldable sheet. The tool assembly also includes one or more fasteners coupled with the foldable sheet. The one or more fasteners removably couple with one or more slots defined on the foldable sheet. The one or more fasteners coupled with the one or more slots of the foldable sheet defines the tool assembly. The tool assembly is characterized in that the tool assembly provides a first configuration when the one or more fasteners couple with at least a first slot of the one or more slots. Further, the tool assembly provides a second configuration when the one or more fasteners couple with at least a second slot of the one or more slots.

Thus, the present disclosure provides an improved design, and arrangement of the tool assembly for gardening. A simple, compact, and user-friendly design of the tool assembly allows a user to perform multiple gardening operations with different arrangements i.e., the first configuration, and the second configuration. Further, the tool assembly provides a variety of lightweight, portable tool(s) with a cost-effective design. The lightweight tool assembly may allow easy handling, maintenance and transportation.

According to an embodiment of the present disclosure, at least one of the first configuration and the second configuration of the tool assembly allows removable coupling of one or more implement. The removable coupling of the one or more implement provides flexibility and allows use of the tool assembly for different operations/applications with different arrangements of the tool assembly.

According to an embodiment of the present disclosure, the one or more implement is a brush. The implement may be any implement such as the brush, or even a mop, broom and the like, which allows cleaning and sweeping during gardening operations.

According to an embodiment of the present disclosure, the tool assembly is one or more of a shovel, brush, puller, funnel, scraper, and broom. The tool assembly allows the user to perform multiple functions with different arrangements i.e., the first configuration, the second configuration of the tool assembly.

According to an embodiment of the present disclosure, the foldable sheet defines one or more edges. The one or more edges allows removable coupling of one or more implements to perform number of gardening operations.

According to an embodiment of the present disclosure, the one or more edges are four edges. The tool assembly includes a simple, compact, and portable design with the four edges.

According to an embodiment of the present disclosure, the one or more slots includes a main slot. The one or more fasteners couples with the main slot and the at least a first slot in the first configuration. The one or more fasteners couples with the main slot and the at least a second slot in the second configuration. The coupling of one or more fasteners with the main slot and other slots i.e., the first slot and the second slot allows use of the tool assembly in different configurations.

According to an embodiment of the present disclosure, the one or more slots are adjustable slots such as to allow adjustment of the one or more fasteners coupled therewith. The adjustable slots provide ease of operation, adjustments based on user friendly configurations of the tool assembly.

According to an embodiment of the present disclosure, the first slot and the second slot are different slots. The different slots allow different shape shifting i.e. , the first configuration, the second configuration of the foldable sheet of the tool assembly.

According to an embodiment of the present disclosure, the first slot and the second slot are similar slots and are placed at different position on the foldable sheet. The different position of the slots allows different shape shifting i.e., the first configuration, and the second configuration of the foldable sheet of the tool assembly.

According to an embodiment of the present disclosure, the one or more slots are three slots. The three slots arrangement provides a simple construction of the tool assembly, while providing options and benefits of multiple configurations i.e., the first configuration, the second configuration.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a top perspective view of a tool assembly, in accordance with the present disclosure;
**FIG. 2** illustrates a bottom perspective view of a tool assembly, in accordance with the present disclosure;
**FIG. 3** illustrates a right perspective view of a tool assembly, in accordance with the present disclosure;
**FIG. 4** illustrates a left perspective view of a tool assembly, in accordance with the present disclosure;
**FIG. 5** illustrates a perspective view of a tool assembly in a first configuration, in accordance with the present disclosure; and
**FIG. 6** illustrates a perspective view of a tool assembly in a second configuration, in accordance with the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

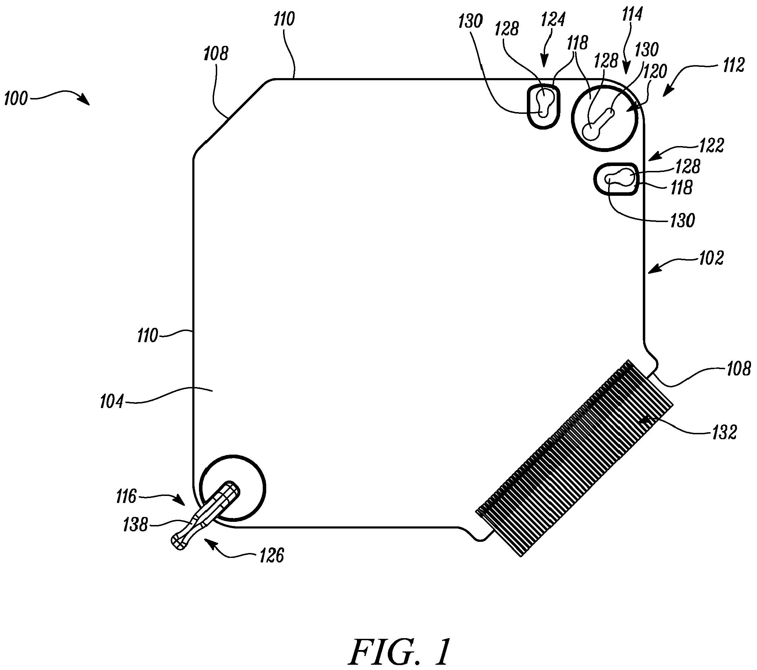

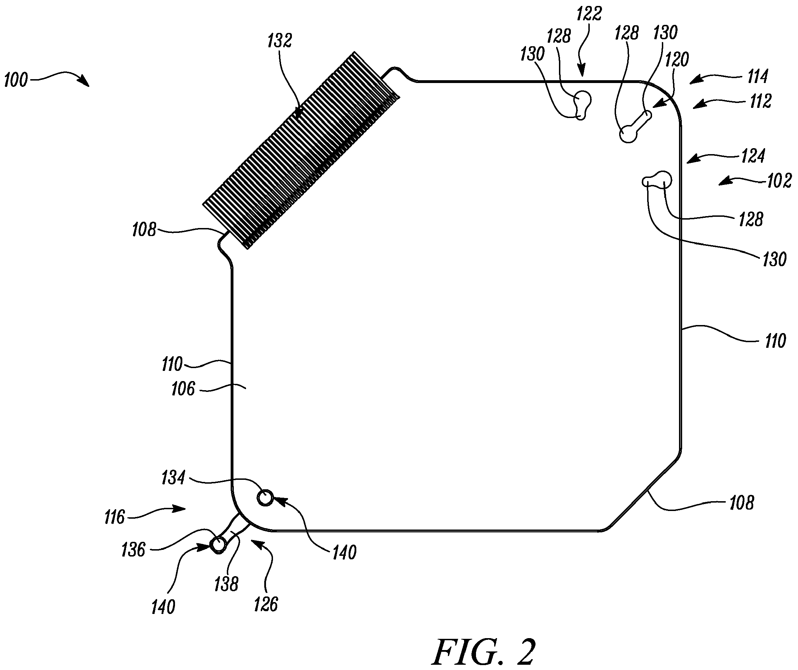

**FIG. 1** shows a tool assembly **100.** The tool assembly **100** may be used for cultivation of soil and different gardening operations as per application requirements. The tool assembly **100** includes a foldable sheet **102.** The foldable sheet **102** may include any shape and size. Further, the foldable sheet **102** may be made up of any material such as, plastic, rubber, and the like. The foldable sheet **102** is flexible and may be folded in any desired shape as per application requirements. In the illustrated embodiment, the foldable sheet **102** includes a square shaped structure, and made up of a flexible plastic material. It should be noted that the foldable sheet **102** of the tool assembly **100** may include any shape, size, material, type and the like, without limiting the scope of the present disclosure. The foldable sheet **102** defines a first surface **104,** and a second surface **106** (as shown in **FIG. 2**). Any or both of the first surface **104** and the second surface **106** may include any desired layer, coating or material as per the requirement. In some embodiments, the first surface **104** and the second surface **106** may be laminated with a suitable material. The lamination may include a water-resistant material, a wear resistant material, and a combination thereof. Further, the foldable sheet **102** may be folded into a cone shape, a cylinder shape, and the like. The foldable sheet **102** may be folded into a funnel shape for gardening applications.

The foldable sheet **102** defines one or more edges **108, 110.** Further, the one or more edges **108,110** are four edges in the illustrated embodiments, however, actual implementation of the present disclosure may have any number, type, position, arrangement of the edges **108, 110.** A first pair of edges **108** may include straight edges, and a second pair of edges **110** may include straight or curved edges. In the illustrated embodiment, the first pair of edges **108** and the second pair of edges **110** are positioned adjacent to each other. In some embodiments, the first pair of edges **108** includes different length, whereas the second pair of edges **110** are similar. In some embodiments, the number of edges **108,110** and the positional arrangement of the edges **108, 110** may be different.

The foldable sheet **102** also defines one or more slots **112.** The one or more slots **112** may include any shape, number, type, and size. The foldable sheet **102** also includes a first portion **114** and a second portion **116** opposite to the first portion **114.** The one or more slots **112** are disposed on the first portion **114** of the foldable sheet **102** proximate the second pair of edges **110.** Each slot **112** defines an outer base portion **118.** The outer base portion **118** may be generally made up of a non-flexible plastic material. In the illustrated embodiment, the one or more slots **112** are three slots. The one or more slots **112** includes a main slot **120.** The one or more slots **112** also includes a first slot **122,** and a second slot **124.** In the illustrated embodiment, the first slot **122** and the second slot **124** are similar slots and are placed at different position on the foldable sheet **102.** The first slot **122** and the second slot **124** are positioned either side of the main slot **120,** such that the main slot **120** is located between the first slot **122** and the second slot **124.** However, any other arrangement, position of the first slot **122,** the second slot **124** and the main slot **120** is well within the scope. In the illustrated embodiment, the main slot **120,** the first slot **122,** and the second slot **124** are disposed at around 45 degrees apart from each other. In some embodiments, the angular disposition of the one or more slots **112** (i.e., the main slot **120,** the first slot **122,** and the second slot **124**) may be different such as, but not limited to, any angles between 30 degrees to 60 degrees, or any other angle. Further, the one or more slots **112** are adjustable slots such as to allow adjustment of a one or more fasteners **126** coupled therewith. As illustrated, the one or more slots **112** define a keyhole shaped slot. The keyhole shape of the one or more slots **112** allows adjustment of the one or more fasteners **126** therein. The keyhole shape of the slots **112** includes a circular part **128** and a longitudinal part **130.** The position of the circular part **128** and the longitudinal part **130** of the main slot **120** is opposite as compared to the position of the circular part **128** and the longitudinal part **130** of the first slot **122,** and the second slot **124.** This may allow desired coupling of the fasteners 126, with both the main slot **120** and the first slot **122,** and the second slot **124.** Further, the shape and size of one or more slots **112** may be similar. In some embodiments, the first slot **122** and the second slot **124** are different slots. Further, the main slot **120** defines the outer base portion **118** which is circular, though any other shape such as oval, square, triangular is well within the scope. Moreover, the first slot **122** and the second slot **124** define the outer base portion **118** which is oval, though any other shape such as circular, square, triangular is well within the scope.

The tool assembly **100** also includes one or more implement **132.** In the illustrated embodiment, the implement **132** is attached to the first edge **108,** however, in some embodiment, the implement **132** may be attached to the second edge **110.** In the illustrated embodiments, the one or more implement **132** is a brush. It should be noted that the one or more implement **132** may include any tool such as a mop, rake, broom, and the like, without limiting the scope of the present disclosure. In the illustrated embodiments, the implement **132** includes a number of bristles arranged along the length of the implement **132.** The implement **132** may be used for different gardening operations, such as cleaning, sweeping, scrapping, and the like.

The tool assembly **100** further includes one or more fasteners **126** coupled with the foldable sheet **102.** The one or more fasteners **126** are disposed on or around the second portion **116** of the foldable sheet **102.** The one or more fasteners **126** removably couple with one or more slots **112** defined on the foldable sheet **102.** In the illustrated embodiment, the tool assembly **100** includes one fastener **126.** In some embodiments, the tool assembly **100** may include any number, type, position, arrangement of the fasteners **126.** It should be noted that the number of fasteners **126** do not limit the scope of the present disclosure. The fastener **126** may be manufactured using a durable material, such as metal, wear resistant plastic, and the like. The fastener **126** is designed ergonomically to facilitate removable coupling with the slots **112.**

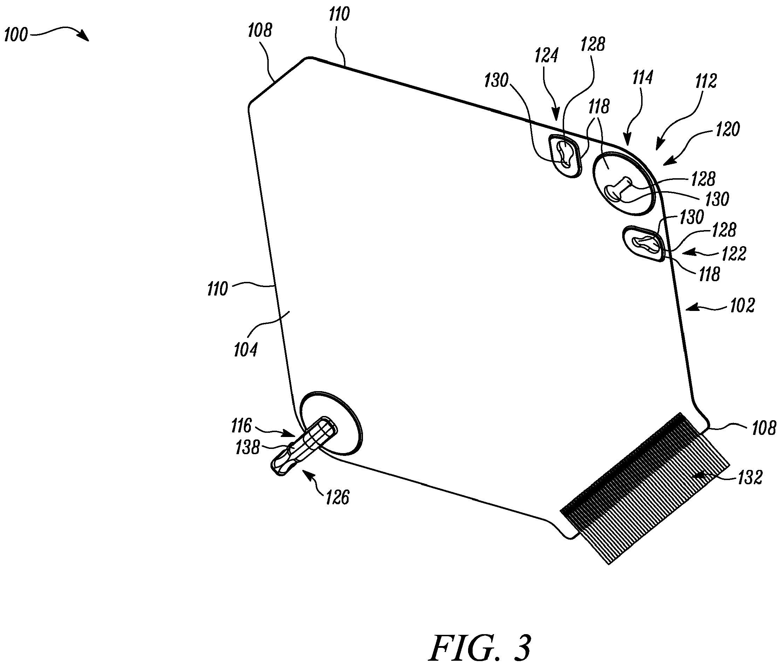

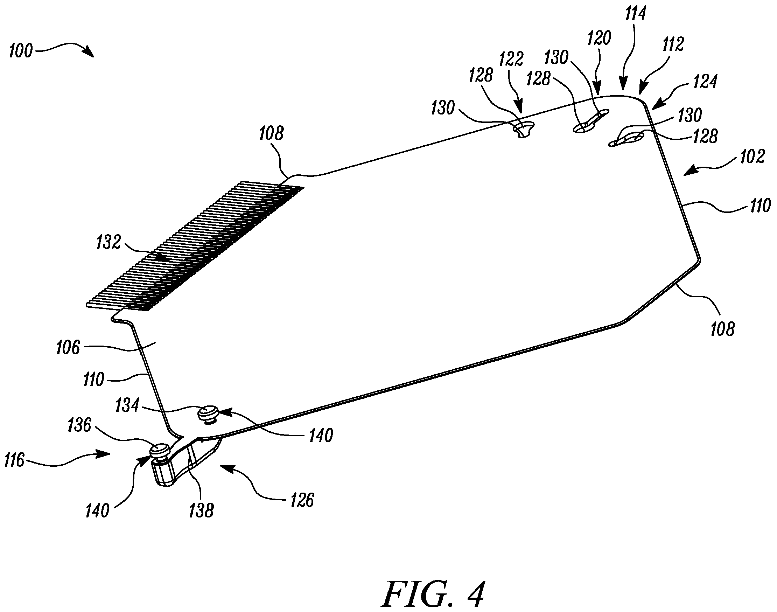

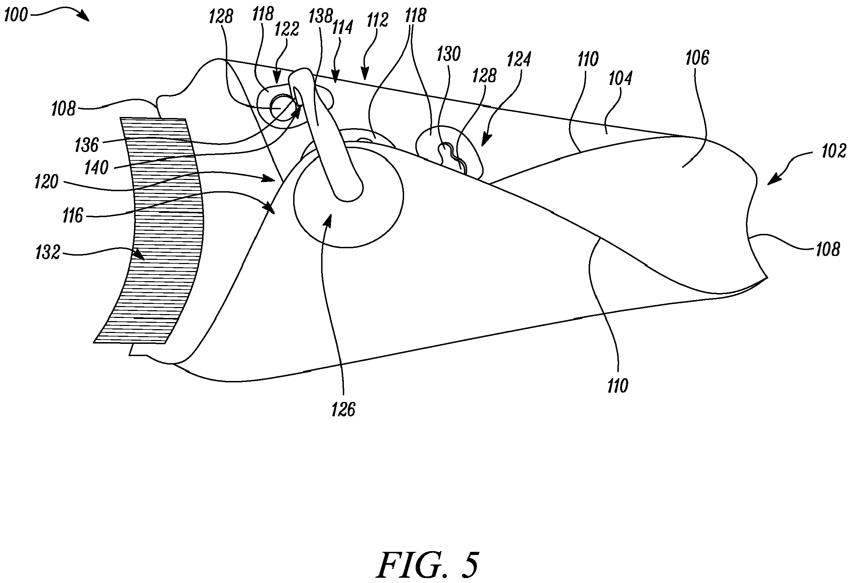

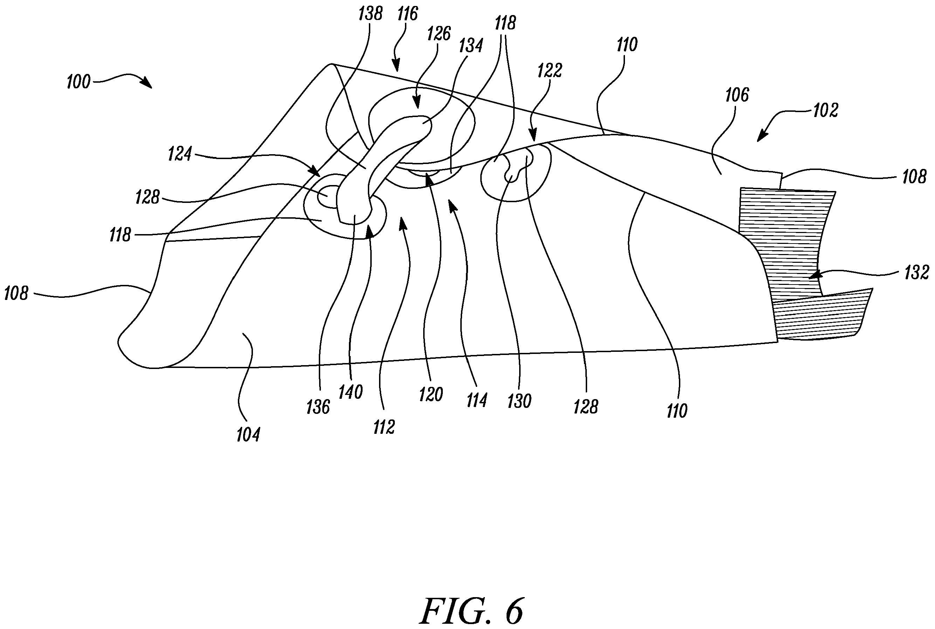

As shown in **FIGS. 2****,** **3****,** and **4****,** the fastener **126** includes a first pin member **134,** a second pin member **136,** and a connecting part **138.** The connecting part **138** connects the first pin member **134** and the second pin member **136.** The first pin member **134** and the second pin member **136** may include a stepped profile **140** (best shown in **FIG. 4**). Further, the one or more fasteners **126** coupled with the one or more slots **112** of the foldable sheet **102** defines the tool assembly **100,** as illustrated in **FIGS. 5****,** **6****.** In some embodiments, the fastener **126** may be adjustable with change in position, length or both of the first pin member **134,** the second pin member **136,** and the connecting part **138.**

In some embodiments, the stepped profile **140** of the first pin member **134** and the second pin member **136** may allow desired coupling of the fastener 126 with the one or more slots **112.** The stepped profile **140** may have a size, profile, dimensions and the like, in accordance with the one or more slots **112,** or any factor related thereto.

Referring to **FIGS. 4****, and** **5****,** the tool assembly **100** provides a first configuration (shown in **FIG. 5**) when the one or more fasteners **126** couple with at least the first slot **122** of the one or more slots **112.** Further, the one or more fasteners **126** couples with the main slot **120** and the at least the first slot **122** in the first configuration. More particularly, the first pin member **134** engages with the main slot **120,** and the second pin member **136** engages with the first slot **122.** Further, the first pin member **134** of the fastener **126** engages with the circular part **128** of the main slot **120.** Then, the stepped profile **140** of the first pin member **134** may get locked with the longitudinal part **130** of the main slot **120.** Similarly, the second pin member **136** of the fastener **126** engages with the circular part **128** of the first slot **122,** and the stepped profile **140** (shown in **FIG. 2**) of the second pin member **136** may get locked with the longitudinal part **130** of the first slot **122.** Further, the foldable sheet **102** in the first configuration exerts a biasing force on the first pin member **134,** and the second pin member **136.** This biasing force allows the first pin member **134,** and the second pin member **136** after engaging into the circular parts **128** of the main slot **120,** and the first slot **122** respectively, to be forced to move into its longitudinal parts **130.** Further, the oppositely positioned circular parts **128** of the main slot **120,** and the first slot **122** provide better engagement between the fastener **126** and the slots **112.**

Referring to **FIGS. 4****, and** **6****,** the tool assembly **100** provides a second configuration (shown in **FIG. 6**) when the one or more fasteners **126** couple with at least the second slot **124** of the one or more slots **112.** Further, the one or more fasteners **126** couples with the main slot **120** and the at least the second slot **124** in the second configuration. The first pin member **134** engages with the main slot **120,** and the second pin member **136** engages with the second slot **124.** Further, the first pin member **134** of the fastener **126** engages with the circular part **128** of the main slot **120.** Then, the stepped profile **140** of the first pin member **134** may get locked with the longitudinal part **130** of the main slot **120.** Similarly, the second pin member **136** of the fastener **126** engages with the circular part **128** of the second slot **124,** and the stepped profile **140** of the second pin member **136** may get locked with the longitudinal part **130** (shown in **FIG. 2**) of the second slot **124.** Further, the foldable sheet **102** in the second configuration exerts the biasing force on the first pin member **134,** and the second pin member **136.** This biasing force allows the first pin member **134,** and the second pin member **136** after engaging into the circular parts **128** of the main slot **120,** and the second slot **124** respectively, to be forced to move into its longitudinal parts **130.** Thus, the oppositely positioned circular parts **128** of the main slot **120,** and the second slot **124** provide better engagement between the fastener **126** and the slots **112.** In some embodiments, the first pin member **134,** and the second pin member **136** may interchangeably engage with the any of the main slot **120,** the first slot **122,** and the second slot **124.**

Further, the fastener **126** may include one or more locks (not shown) to keep the tool assembly **100** locked in the first configuration, and the second configuration. Furthermore, in the first configuration and the second configuration, the brush may be used at one end of the tool assembly **100** while the other end may be used for scooping, gardening, and the like. In some embodiment, the foldable sheet **102** may include one or more markings (not shown), guiding lines (not shown), and the like, to fold the tool assembly **100** into the first configuration, the second configuration, or any other configuration/shape.

The engagement of the fastener **126** with one or more slots **112** allows foldable sheet **102** to fold into the funnel shaped or cone shaped configurations, as illustrated in **FIGS. 5****,** **6****.** Further, at least one of the first configuration and the second configuration of the tool assembly **100** allows removable coupling of one or more implement **132.** Moreover, the tool assembly **100** provides one or more of a shovel, brush, puller, funnel, scraper, and broom. The first configuration and the second configuration of the tool assembly **100** may be used for different gardening operations, such as cleaning, sweeping, digging, levelling, scrapping, and the like.

The present disclosure provides an improved design of the tool assembly **100** for cultivation of soil and taking care of garden applications, among others. The tool assembly **100** includes a simple design which allows the user to perform multiple gardening operations with different arrangements as per application requirements. The simple, user-friendly, and lightweight tool assembly **100** may allow easy handling and transportation of the tool assembly **100.** Further compact design of the tool assembly **100** allows easy storage, transport, and maintenance of the tool assembly **100.** The removable coupling of the implement **132** allows use of different attachments, such as the shovel, brush, puller, funnel, scraper, broom, and the like. These different attachments (say the implement **132**) along with the different configurations (say the first configuration or the second configuration) may be used in variety of gardening operations, such as cleaning, sweeping, digging, levelling, scrapping and the like. Further, coupling of one or more fasteners **126** with the one or more slots **112** allows use of tool assembly **100** in different configurations i.e., the first configuration or the second configuration as per **FIGS. 5****,** **6** of the present disclosure. Furthermore, oppositely positioned circular parts **128** of the main slot **120,** the first slot **122,** and the second slot **124** provide better engagement between the fastener **126** and the slots **112.**

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Tool Assembly
- **102**: Foldable Sheet
- **104**: First Surface
- **106**: Second Surface
- **108**: First Pair of Edges
- **110**: Second Pair of Edges
- **112**: Slots
- **114**: First Portion
- **116**: Second Portion
- **118**: Outer Base Portion
- **120**: Main Slot
- **122**: First Slot
- **124**: Second Slot
- **126**: Fasteners
- **128**: Circular Part
- **130**: Longitudinal Part
- **132**: Implement
- **134**: First Pin Member
- **136**: Second Pin Member
- **138**: Connecting Part
- **140**: Stepped Profile

## Claims

1. A tool assembly **(100)** comprising:
a foldable sheet **(102);** and
one or more fasteners **(126)** coupled with the foldable sheet **(102),** wherein the one or more fasteners **(126)** is adapted to removably couple with one or more slots **(112)** defined on the foldable sheet **(102);**
the one or more fasteners **(126)** coupled with the one or more slots **(112)** of the foldable sheet **(102)** defines the tool assembly **(100),**
**characterized in that:**
wherein the tool assembly **(100)** provides a first configuration when the one or more fasteners **(126)** couple with at least a first slot **(122)** of the one or more slots **(112),** and
the tool assembly **(100)** provides a second configuration when the one or more fasteners **(126)** couple with at least a second slot **(124)** of the one or more slots **(112).**

2. The tool assembly **(100)** of claim 1, wherein at least one of the first configuration and the second configuration of the tool assembly **(100)** allows removable coupling of one or more implement **(132).**

3. The tool assembly **(100)** of claim 2, wherein the one or more implement **(132)** is a brush.

4. The tool assembly **(100)** of claim 1, wherein the tool assembly **(100)** is one or more of a shovel, brush, puller, funnel, scraper, and broom.

5. The tool assembly **(100)** of claim 1, wherein the foldable sheet **(102)** defines one or more edges **(108), (110).**

6. The tool assembly **(100)** of claim 5, wherein the one or more edges **(108), (110)** are four edges.

7. The tool assembly **(100)** of claim 1, wherein the one or more slots **(112)** includes a main slot **(120),** wherein the one or more fasteners **(126)** couples with the main slot **(120)** and the at least a first slot **(122)** in the first configuration, and the one or more fasteners **(126)** couples with the main slot **(120)** and the at least a second slot **(124)** in the second configuration.

8. The tool assembly **(100)** of claim 1, wherein the one or more slots **(112)** are adjustable slots such as to allow adjustment of the one or more fasteners **(126)** coupled therewith.

9. The tool assembly **(100)** of claim 1, wherein the first slot **(122)** and the second slot **(124)** are different slots.

10. The tool assembly **(100)** of claim 1, wherein the first slot **(122)** and the second slot **(124)** are similar slots, and are placed at different position on the foldable sheet **(102).**

11. The tool assembly **(100)** of claim 1, wherein the one or more slots **(112)** are three slots.
